# EUROPEAN PATENT APPLICATION

(11) **EP 1 090 551 A1**
(43) Date of publication of application: **11.04.2001**
(21) Application number: 99925314.9
(22) Date of filing: 14.06.1999
(51) Int. Cl.: A01N 25/04, A01N 25/30

(54) **PESTICIDE PREPARATIONS IN THE FORM OF AQUEOUS SUSPENSION**

(30) Priority: 24.06.1998 JP 17756098
(71) Applicant: SHIONOGI & CO., LTD., Osaka-shi, Osaka 541-0045 (JP)
(72) Inventor: ANDO, Iwao, Koka-gun, Shiga 520-3241 (JP); IBA, Yaeko, Koka-gun, Shiga 520-3415 (JP); UESUGI, Akihisa, Ako-shi, Hyogo 678-0236 (JP)
(74) Representative: Harding, Charles Thomas
(86) International application number: JP9903159
(87) International publication number: WO9966792

(57) **Abstract**

Pesticide preparations in the form of an aqueous suspension wherein particles containing one or more pesticidal active ingredients and having a solubility in water at 20 °C of from 100 ppm to 1,000 ppm (inclusive) are dispersed in an aqueous vehicle containing a condensed arylsulfonic acid salt optionally combined with a lignin sulfonic acid salt. These preparations can achieve a preparation stability of inhibiting the development of the pesticidal active ingredient particles while exerting biological effects comparable to those of granular pesticides. Moreover, the above preparations show a chemical injury frequency comparable to or lower than those of granular pesticides.

## Description

### TECHNICAL FIELD

The present invention relates to an agrochemical formulation in the form of an aqueous suspension including an agrochemical active ingredient having a water solubility of 100 ppm or more and 1000 ppm or less at 20°C, and more specifically relates to an agrochemical formulation in the form of an aqueous suspension, in which the agrochemical active ingredient in the form of fine particles is inhibited from increasing in size during storage.

### BACKGROUND ART

Recently, a water-based formulation in the form of an aqueous suspension (flowable formulation) has been a target of attention as an agrochemical formulation in the form of an aqueous suspension for being highly safe, free of problems of flammability or odor, and easy to store and handle. The flowable formulation is considered to be demanded more in the future. The flowable formulation, which can be handled at the irrigation inlet or balk of rice paddles, is attracting attention also in terms of energy savings at the time of (pesticide) application.

Usually, agrochemical particles in the flowable formulation are considered to preferably have an average particle diameter of about 5 µm or less in order to guarantee the suspension stability. When being stored at a high temperature, however, even such fine particles can aggregate and increase in size, resulting in separation by sedimentation and hard caking, which causes problems in practical use.

Recently, formulation compositions including an agrochemical active material which has a low water solubility (i.e., which is difficult to dissolve in water), in which crystal growth of particles are inhibited, have been disclosed (Japanese Laid-Open Publication Nos. 9-278608 and 5-43401).

In general, however, it is considered that when an agrochemical active ingredient having a relatively high water solubility is used in a flowable formulation, the particle diameter of the material increases overtime in storage, which has adverse influences on physical properties of the formulation and also bioactivity. Therefore, the water solubility of the ingredient usable in the flowable formulation is considered to be preferably about 100 ppm or less (Tatsuo SATO, "[Flowable Formulation]", pp. 35-42 of "[Agricultural Chemical Guide]", edited by Nihon Noyaku Gakkai (Pesticide Science Society of Japan), Noyakuseizai Seyoho Kenkyukai (Japan Agricultural Formuration & Application Committee), published by Nihon Shokubutsu Boeki Kyokai (Japan Plant Protection Association) (1997)).

An objective of the present invention is to provide an agrochemical formulation in the form of an aqueous suspension, the stability of which can be guaranteed by inhibition of particle growth of an agrochemical active ingredient included therein even when the agrochemical active ingredient has a relatively high water solubility.

### DISCLOSURE OF THE INVENTION

As a result of various studies and active researches, the present inventors have found that the above-described problems can be solved with a formulation in the form of an aqueous suspension including an agrochemical active ingredient having a water solubility of about 100 ppm or more and about 1000 ppm or less at 20°C, by causing one or two or more specific sulfonic acid-based surfactants to be included in the formulation in the form of an aqueous suspension.

The present invention provides an agrochemical formulation in the form of an aqueous suspension including particles of one or two or more types of agrochemical active ingredients dispersed in an aqueous medium including a sulfonic acid-based surfactant. The agrochemical active ingredient has a water solubility of 100 ppm or more and 1000 ppm or less at 20°C. The sulfonic acid-based surfactant is one of an arylsulfonate condensate salt, and a combination of an arylsulfonate condensate salt and a ligninsulfonate salt.

In one embodiment of the invention, the sulfonic acid-based surfactant is the combination of the arylsulfonate condensate salt and the ligninsulfonate salt.

In one embodiment of the invention, the particles have an average particle diameter of about 0.1 µm to about 10 µm.

In one embodiment of the invention, the particles have an average particle diameter of about 0.5 µm to about 4 µm.

In one embodiment of the invention, the agrochemical active ingredient is contained in about 0.5% by weight to about 70% by weight with respect to a total weight of the agrochemical formulation in the form of an aqueous suspension, and the sulfonic acid-based surfactant is contained in about 1% by weight to about 20% by weight with respect to the total weight of the agrochemical formulation in the form of an aqueous suspension.

In one embodiment of the invention, the agrochemical formulation in the form of an aqueous suspension further includes a thickening agent in the aqueous dispersion medium, the thickening agent being one of a polymer-based thickening agent and an inorganic thickening agent.

In one embodiment of the invention, the thickening agent is one or two or more selected from the group consisting of xanthan gum, wellane gum, rhamxan gum, guar gum, locust bean gum, tragacanth gum, and colloidal silica.

In one embodiment of the invention, the thickening agent is contained in about 0.01% by weight to about 20% by weight with respect to a total weight of the agrochemical formulation in the form of an aqueous suspension.

In one embodiment of the invention, the agrochemical formulation in the form of an aqueous suspension substantially excludes a surfactant having a polyoxyethylene chain in the structure thereof.

In one embodiment of the invention, the agrochemical formulation in the form of an aqueous suspension substantially excludes alkylarylsulfonate.

In one embodiment of the invention, the agrochemical active ingredient is a fungicide.

In one embodiment of the invention, the fungicide is methominostrobin.

### BEST MODE FOR CARRYING OUT THE INVENTION

An "agrochemical active ingredient having a water solubility of 100 ppm or more and 1000 ppm or less at 20°C" usable in the present invention is preferably solid at room temperature and has a melting point of 60°C or more. More preferably, the above-described agrochemical active ingredient has a water solubility of 100 ppm or more and 500 ppm or less at 20°C. Such ranges of water solubility solve the above-described problems of the prior art (refer to the above-mentioned publication by Tatsuo SATO). In accordance with the purpose, an agrochemical active ingredient can be used independently, or two or more agrochemical active ingredients can be used in combination.

Examples of the "agrochemical active ingredient having a water solubility of 100 ppm or more and 1000 ppm or less at 20°C" usable in the present invention include fungicides such as, for example, azaconazole, carboxin, chloraniformethan, chloranil, clozylacon, cymoxanil, cyproconazole, cyprofuram, ditalimfos, dodine, ethirimol, ferbam, flusilazole, flutriafol, furalaxyl, gliotoxin, imazalil, methominostrobin, metsulfovax, myclobutanil, ofurace, 2-phenylphenol, pyrimethanil, thymol, and zarilamid; acaricides such as, for example, cymiazole, and RA-17; insecticides such as, for example, aldoxycarb, carbofuran, coroxon, dimethylvinphos, fenethacarb, fenobucarb, imidacloprid, metaldehyde, methidathion, mexacarbate, pymetrozine, sabadilla, triazamate, XMC, and xylylcarb; herbicides such as, for example, acifluorfen-sodium, alachlor, ametryn, bentazone, benfuresate, bromacil, brompyrazon, chloramben, chlorbufam, chlorfenac, chloridazon, chlorsulfuron, cyanazin, cypromid, 2,4-D, desmetryn, dichlormate, difenzoquat, diphenamid, eglinazine-ethyl, fenoprop, imazaquin, isouron, karbutilate, MCPA, mecoprop, methoprotryne, methylbencarb, methyldymron, metobromuron, metoxuron, monuron, monuron TCA, naptalam, nicosulfuron, picloram, proglinazine-ethyl, prometon, propachlor, propanil, proximpham, prozolamid, prynachlor, secbumeton, simetryn, sulfometuron, swep, 2,4,5-T, terbacil, and terbumeton; insecticides/acaricides such as, for example, chlordimeform, chlorthiamid, clofop-isobutyl, menazon, procyazine, and triflusulfuron-methyl; insecticides/nematicides such as, for example, fenamiphos and tirpate; insecticides/acaricides/rodenticides such as, for example, FABA; insecticides/acaricides/fungicides such as, for example, triamiphos; bactericides such as, for example, chlortetracycline and oxytetracycline; plant growth regulators such as, for example, ancymidol, ethychlozate, fluoridamid, flurprimidol, mefluidide, naphthylacetic acid, and prohexadione-calcium; rodenticides such as, for example, antu, chlorophacinone, and strychnine; plant growth regulators/herbicides such as, for example, dichlorprop and dikegulac: and plant growth regulators/fungicides such as, for example, methasulfocarb.

Among the above-listed agrochemical active ingredients, fungicides are preferable, and methominostrobin is more preferable.

A particle of the agrochemical active ingredient usable in the present invention has a fine average particle diameter generally of about 0.1 µm to several tens of micrometers, preferably of about 0.1 µm to about 10 µm, more preferably of about 0.1 µm to about 5 µm, and most preferably of about 0.5 µm to about 4 µm.

The ratio of the agrochemical active ingredient used in an agrochemical formulation according to the present invention is preferably about 0.5% by weight to about 70% by weight, more preferably about 5% by weight to about 60% by weight, and still more preferably about 15% by weight to about 60% by weight. In this specification, the content of various components in the agrochemical formulation is represented based on the total weight of the agrochemical formulation.

As a sulfonic acid-based surfactant in the agrochemical formulation according to the present invention, an arylsulfonate condensate salt and a ligninsulfonate salt are usable. It is preferable to use an arylsulfonate condensate salt independently or a mixture of an arylsulfonate condensate salt and a ligninsulfonate salt. It is more preferable to use a mixture of an arylsulfonate condensate salt and a ligninsulfonate salt. The sulfonic acid-based surfactant is contained in the agrochemical formulation preferably in about 1% by weight to about 20% by weight, and more preferably in about 2.5% by weight to about 15% by weight.

Examples of "aryl" in the "arylsulfonate condensate salt" usable in the present invention include aryl groups having 6 to 14 carbon atoms such as, for example, phenyl and naphthyl. Examples of the salt in an "arylsulfonate condensate salt" include metal salts such as, for example, sodium salts, potassium salts, calcium salts; and ammonium salts. Preferable "arylsulfonate condensate salts" include, for example, sodium benzenesulfonate formaldehyde condensates and sodium naphthalenesulfonate formaldehyde condensates. The arylsulfonate condensate salt is contained in the agrochemical formulation preferably in about 1% by weight to about 20% by weight, and more preferably in about 2.5% by weight to about 15% by weight.

Examples of a "ligninsulfonate salt" usable in the present invention include, for example, sodium ligninsulfonates, calcium ligninsulfonates, ammonium ligninsulfonates, and modified sodium ligninsulfonates. The "ligninsulfonate salt" is contained in the agrochemical formulation preferably in about 1% by weight to about 19% by weight, more preferably in about 2.5% by weight to about 15% by weight, and still more preferably in about 2.5% by weight to about 5% by weight.

Specific components and trade names of the surfactants usable in the present invention are, for example, a sodium β-naphthalenesulfonate formalin condensate (DEMOL N and DEMOL RN, Kao Corporation), a sodium special aromatic sulfonate formalin condensate (DEMOL MS and DEMOL SNB, Kao Corporation), a sodium naphthalenesulfonate formaldehyde polycondensate (Newkalgen FS-4, Takemoto Oil & Fat Co., Ltd.), a ligninsulfonate salt (Newkalgen WG-4, Takemoto Oil & Fat Co., Ltd.), and a naphthalenesulfonate condensate salt (RUNOX 1000C, Toho Chemical Industry Co., Ltd.).

Examples of an "alkylarylsulfonate" which is preferably substantially excluded from an agrochemical formulation according to the present invention include, for example, metal salts such as, for example, sodium salts, potassium salts, and calcium salts and ammonium salts of a sulfonic acid having an aryl group having 6 to 14 carbon atoms, such as, for example, phenyl and naththyl, which are substituted with a straight- or branched chain alkyl group having 1 to 6 carbon atoms, such as, for example, methyl, ethyl, n-propyl, isopropyl and n-butyl.

Examples of a sulfonic acid-based surfactant which can be contained in an agrochemical formulation according to the present invention, other than the arylsulfonate condensate salts and ligninsulfonate salts, include arylsulfonate salts (e.g., benzenesulfonate salt, naphthalenesulfonate salt), styrenesulfonate salts (e.g., polystyrenesulfonate salt), dialkyl sulfosuccinate salts, and alkyl sulfate esters.

An agrochemical formulation in the form of an aqueous suspension according to the present invention can optionally include various anionic or nonionic surfactants having a capability of reducing the surface tension, in addition to the above-listed sulfonic acid-based surfactants. Notably, it is preferable that surfactants having a polyoxyethylene chain in the structure is not substantially contained in order to achieve the maximum effects of the present invention.

Examples of an anionic surfactant having a polyoxyethylene chain in the structure include, for example, polyoxyethylene alkylether sulfate, polyoxyethylene alkylarylether sulfate, polyoxyethylene alkylether phosphate, and polyoxyethylene alkylarylether phosphate. These salts can be, for example, alkaline metal salts, ammonium salts, or amine salts.

Examples of a nonionic surfactant having a polyoxyethylene chain in the structure include, for example, polyoxyethylene alkylether, polyoxyethylene alkylarylether, polyoxyethylene alkylarylphenylether, and polyoxyethylene sorbitan fatty acid ester, and polyoxyethylene polyoxypropylene glycol.

An agrochemical formulation in the form of an aqueous suspension according to the present invention can further include a thickening agent. Examples of the thickening agent include, for example, polymer-based thickening agents and inorganic thickening agents. Preferable polymer-based thickening agents include, for example, xanthan gum, wellane gum, rhamxan gum, guar gum, locust bean gum, and tragacanth gum. Preferable inorganic thickening agents include, for example, bentonite, colloidal silica, and colloidal hydrated aluminum magnesium silicate. Other substances which can act as a thickening agent include, for example, pullulan, pectin, arabinogalactan, casein, Tara gum, gum arabic, tamarind gum, karaya gum, starch, sodium alginate, carageenan, celluloses (e.g., carboxymethyl cellulose, carboxyethyl cellulose, methylcellulose, hydroxypropylcellulose, hydroxyethylcellulose, and the like), polyvinyl alcohol, and polyacrylic acid.

The viscosity of the agrochemical formulation may be lower when certain agrochemical active ingredients are used. In such a case, a "supernatant watery layer" tends to be formed in an upper portion of the suspension due to the sedimentation of the particles. The ratio of the thickening agent can be raised to increase the viscosity of the formulation in order to avoid the formation of the supernatant watery layer. The ratio of the thickening agent with respect to the total amount of the formulation is generally about 0.01% by weight to about 20% by weight, more preferably about 0.03% by weight to about 15% by weight, and still more preferably about 0.03% by weight to about 5% by weight. The thickening agent included in the agrochemical formulation in the form of an aqueous suspension can increase the viscosity to, for example, about 200 mPa · s to about 2000 mPa · s, and preferably about 400 mPa · s to about 1500 mPa · s.

An agrochemical formulation according to the present invention can optionally include an anti-freezing agent, an anti-foaming agent, and an antiseptic in addition to the above-described components.

Examples of the anti-freezing agent include, for example, ethylene glycol, propylene glycol, and glycerin. The anti-freezing agent is generally contained in the agrochemical formulation in about 3% by weight to about 10% by weight.

Examples of the anti-foaming agent include, for example, silicone-based compounds, and emulsions of silicone and modified silicone. The anti-foaming agent is generally contained in about 0.1% by weight to about 1% by weight in the agrochemical formulation.

Examples of the antiseptic include, for example, formalin solution, sorbic acid, butyl p-oxybenzoate, potassium sorbate, organic nitrogen sulfur-based composites, sodium benzoate, 1,2-benzisothiazolin-3-one, organic nitrogen sulfur halogen-based compounds. The antiseptic is generally contained in the agrochemical formulation in about 0.1% by weight to about 1% by weight.

An agrochemical formulation in the form of an aqueous suspension according to the present invention can further optically include, known various additives such as, for example, a stabilizing agent, a crystal growth inhibitor, a specific gravity adjusting agent, a color masking agent, and a pH adjusting agent.

An agrochemical formulation in the form of an aqueous suspension according to the present invention can be produced in any known method for producing a usual agrochemical formulation in the form of an aqueous suspension with no specific limitation.

In general, an agrochemical formulation according to the present invention can be produced by a three-step method including (1) pulverization, (2) wetting and (3) stabilization.

The first step, i.e., pulverization, refers to pulverizing the solid agrochemical active material by a mechanical force into primary particles. The next step, i.e., wetting, refers to removing air adsorbed to the dry surface of the primary particles by a dispersion medium. The last step, i.e., stabilization, refers to maintaining the primary particles stable so as not to be re-aggregated in the dispersion medium.

In wet pulverization, the steps of (1) pulverization and (2) wetting can be performed at the same time. For example, a slurry obtained by adding a dispersion medium, a surfactant and an agrochemical active ingredient to a prescribed amount of water is pulverized by wet pulverization. The pulverization is preferably performed so that the average particle diameter of the agrochemical active ingredient is about 3 µm or less. The wet pulverization can be performed by, for example, a wet pulverizer such as an attriter, sand grinder, dyno mill, pearl mill, apex mill, visco mill, ultra-visco mill, or nanomizer. When it is difficult to pulverize the agrochemical active ingredient only by wet pulverization, the agrochemical active material can be pulverized before the slurry is prepared.

The above-described step (3) of stabilization is performed in order to maintain the stability of the physical properties of the flowable formulation. In this step, for example, an additive for providing an electrostatic repulsive force between particles or an additive for causing a steric hindrance repulsive force is added, both in order to avoid re-aggregation of the primary particles.

An agrochemical formulation in the form of an aqueous suspension according to the present invention can be used in any known usual method of using an agrochemical formulation in the form of an aqueous suspension with no specific limitation. Specifically, the method of use is appropriately selected in accordance with the type of agrochemical active ingredient (i.e., an insecticide, fungicide, herbicide or any other substance) or the physical properties of the agrochemical active material (e.g., hardness, wettability, m·ρg, particle diameter, and the like). The amount of use is appropriately selected in accordance with the time duration of use or the like.

For example, an agrochemical formulation in the form of an aqueous suspension including methominostrobin (which is a fungicide used for rice paddies), as the agrochemical active ingredient is applied over a rice paddy uniformly using, for example, a sprayer, so that methominostrobin is generally sprayed in the amount of about 1 g to about 1000 g per 10a (1000m²), preferably in the amount of about 10 g to about 500 g per 10a (1000m²).

### Examples

Hereinafter, the present invention will be described by way of illustrative but non-limiting examples. In the examples, the term "parts" refers to "parts by weight".

### (Example 1)

26.03 parts of methominostrobin material was pulverized by a sample mill. Then, 25.00 parts of 40.8% aqueous solution of a sodium naphthalenesulfonate formaldehyde polycondensate (Newkalgen FS-4, Takemoto Oil & Fat Co., Ltd.), 0.20 parts of 1,2-benzisothiazolin-3-one (PROXEL GXL, Zeneca K.K.), 5.00 parts of ethylene glycol (Wako Pure Chemical Industries, Ltd.), and 41.27 parts of distilled water were added to the pulverized methominostrobin ingredient, and mixed by a homo disper (Tokushu Kika Kogyo Co., Ltd.; 400 to 450 rpm) for 5 minutes. Then, the resultant mixture was pulverized by a dyno mill (Shinmaru Enterprises Corporation; grinding container: 0.3 liters; 100 ml/min.×2 Pass; glass bead 3GX (0.5 to 0.75 mm. dia.); peripheral speed: 10 m/sec.). The post-pulverization average particle diameter of methominostrobin was 1.01 µm. To the resultant methominostrobin, 2.50 parts of 2% aqueous solution of xanthan gum (Rhodopol 23, Rhone-Poulenc)treated with stirring and mixing by a homo disper (Tokushu Kika Kogyo Co., Ltd.) was added. These substances were further treated with stirring and mixing by a homo disper, thus obtaining an agrochemical formulation in the form of an aqueous suspension.

### (Example 2)

26.03 parts of methominostrobin ingredient was pulverized by a sample mill. Then, 20.00 parts of 40.8% aqueous solution of a sodium naphthalenesulfonate formaldehyde polycondensate (Newkalgen FS-4, Takemoto Oil & Fat Co., Ltd.), 2.00 parts of sodium ligninsulfonate (Newkalgen WG-4, Takemoto Oil & Fat Co., Ltd.), 0.05 parts of an organic nitrogen sulfur-based composite (Biohope, K·I Chemical Industry Co., Ltd.), 5.00 parts of ethylene glycol (Wako Pure Chemical Industries, Ltd.), and 44.42 parts of distilled water were added to the pulverized methominostrobin material, and mixed by a homo disper (Tokushu Kika Kogyo Co., Ltd.; 400 to 450 rpm) for 5 minutes. Then, the resultant mixture was pulverized by a dyno mill (Shinmaru Enterprises Corporation; grinding container: 0.3 liters; 100 ml/min.×2 Pass; glass bead 3GX (0.5 to 0.75 mm. dia.): peripheral speed: 10 m/sec.). The post-pulverization average particle diameter of methominostrobin was 1.19 µm. To the resultant methominostrobin, 2.50 parts of 2% aqueous solution of xanthan gum (Rhodopol 23, Rhone-Poulenc S.A.)treated with stirring and mixing by a homo disper (Tokushu Kika Kogyo Co., Ltd.) was added. These substances were further treated with stirring and mixing by a homo disper, thus obtaining an agrochemical formulation in the form of an aqueous suspension.

### (Example 3)

26.03 parts of methominostrobin material was pulverized by a sample mill. Then, 12.50 parts of 40.8% aqueous solution of a sodium naphthalenesulfonate formaldehyde polycondensate (Newkalgen FS-4, Takemoto Oil & Fat Co., Ltd.), 5.00 parts of sodium ligninsulfonate (Newkalgen WG-4, Takemoto Oil & Fat Co., Ltd.), 0.05 parts of an organic nitrogen sulfur-based composite (Biohope, K·I Chemical Industry Co., Ltd.), 5.00 parts of propylene glycol (Asahi Denka Kogyo K.K.), and 46.42 parts of distilled water were added to the pulverized methominostrobin material, and mixed by a homo disper (Tokushu Kika Kogyo Co., Ltd.; 400 to 450 rpm) for 5 minutes. Then, the resultant mixture was pulverized by a dyno mill (Shinmaru Enterprises Corporation; grinding container: 0.3 liters; 100 ml/min.×2 Pass; glass bead 3GX (0.5 to 0.75 mm. dia.); peripheral speed: 10 m/sec.). The post-pulverization average particle diameter of methominostrobin was 1.04 µm. To the resultant methominostrobin, 5.00 parts of 2% aqueous solution of xanthan gum (Rhodopol 23, Rhone-Poulenc S.A.)treated with stirring and mixing by a homo disper (Tokushu Kika Kogyo Co., Ltd.) was added. These substances were further treated with stirring and mixing by a homo disper, thus obtaining an agrochemical formulation in the form of an aqueous suspension.

### (Example 4)

26.03 parts of methominostrobin material was pulverized by a sample mill. Then, 25.00 parts of 40.8% aqueous solution of a sodium naphthalenesulfonate formaldehyde polycondensate (Newkalgen FS-4, Takemoto Oil & Fat Co., Ltd.), 0.05 parts of an organic nitrogen sulfur-based composite (Biohope, K·I Chemical Industry Co., Ltd.), 5.00 parts of propylene glycol (Asahi Denka Kogyo K.K.), and 33.92 parts of distilled water were added to the pulverized methominostrobin material, and mixed by a homo disper (Tokushu Kika Kogyo Co., Ltd.; 400 to 450 rpm) for 5 minutes. Then, the resultant mixture was pulverized by a dyno mill(Shinmaru Enterprises Corporation; grinding container: 0.3 liters; 100 ml/min.×3 Pass; glass bead 3GX (0.5 to 0.75 mm. dia.); peripheral speed: 10 m/sec.). The post-pulverization average particle diameter of methominostrobin was 0.98 µm. To the resultant methominostrobin, 10.00 parts of 2% aqueous solution of xanthan gum (Rhodopol 23, Rhone-Poulenc S.A.)treated with stirring and mixing by a homo disper (Tokushu Kika Kogyo Co., Ltd.) was added. These substances were further treated with stirring and mixing by a homo disper, thus obtaining an agrochemical formulation in the form of an aqueous suspension.

### (Example 5)

26.03 parts of methominostrobin material was pulverized by a sample mill. Then, 20.00 parts of 40.8% aqueous solution of a sodium naphthalenesulfonate formaldehyde polycondensate (Newkalgen FS-4, Takemoto Oil & Fat Co., Ltd.), 2.00 parts of sodium ligninsulfonate (Newkalgen WG-4, Takemoto Oil & Fat Co., Ltd.), 0.05 parts of an organic nitrogen sulfur-based composite (Biohope, K·I Chemical Industry Co., Ltd.), 5.00 parts of propylene glycol (Asahi Denka Kogyo K.K.), and 36.92 parts of distilled water were added to the pulverized methominostrobin material, and mixed by a homo disper (Tokushu Kika Kogyo Co., Ltd.; 400 to 450 rpm) for 5 minutes. Then, the resultant mixture was pulverized by a dyno mill (Shinmaru Enterprises Corporation; grinding container: 0.3 liters; 100 ml/min.×3 Pass; glass bead 3GX (0.5 to 0.75 mm. dia.); peripheral speed: 10 m/sec.). The post-pulverization average particle diameter of metbominostrobin was 0.68 µm. To the resultant methominostrobin, 10.00 parts of 2% aqueous solution of xanthan gum (Rhodopol 23, Rhone-Poulenc S.A.)treated with stirring and mixing by a homo disper (Tokushu Kika Kogyo Co., Ltd.) was added. These substances were further treated with stirring and mixing by a homo disper, thus obtaining an agrochemical formulation in the form of an aqueous suspension.

### (Example 6)

26.03 parts of methominostrobin material was pulverized by a sample mill. Then, 12.50 parts of 40.8% aqueous solution of a sodium naphthalenesulfonate formaldehyde polycondensate (Newkalgen FS-4, Takemoto Oil & Fat Co., Ltd.), 5.00 parts of sodium ligninsulfonate (Newkalgen WG-4, Takemoto Oil & Fat Co., Ltd.), 0.05 parts of an organic nitrogen sulfur-based composite (Biohope, K·I Chemical Industry Co., Ltd.), 5.00 parts of propylene glycol (Asahi Denka Kogyo K.K.), and 41.42 parts of distilled water were added to the pulverized methominostrobin material, and mixed by a homo disper (Tokushu Kika Kogyo Co., Ltd.; 400 to 450 rpm) for 5 minutes. Then, the resultant mixture was pulverized by a dyno mill(Shinmaru Enterprises Corporation; grinding container: 0.3 liters; 100 ml/min.×3 Pass; glass bead 3GX (0.5 to 0.75 mm. dia.); peripheral speed: 10 m/sec.). The post-pulverization average particle diameter of methominostrobin was 0.64 µm. To the resultant methominostrobin, 10.00 parts of 2% aqueous solution of xanthan gum (Rhodopol 23, Rhone-Poulenc S.A.) treated with stirring and mixing by a homo disper (Tokushu Kika Kogyo Co., Ltd.) was added. These substances were further treated with stirring and mixing by a homo disper, thus obtaining an agrochemical formulation in the form of an aqueous suspension.

### (Reference example 1)

26.12 parts of methominostrobin material was pulverized by a sample mill. Then, 0.20 parts of polyoxyethylene tristyrylphenylether phosphate ester triethanol amine (Soprophor FL, Rhone-Poulenc Japan), 8.00 parts of propylene glycol (Asahi Denka Kogyo K.K.), 0.01 parts of emulsion of modified silicone (Antifoam E-20, Kao Corporation), and 38.85 parts of distilled water were added to the pulverized methominostrobin material, and mixed by a homo disper (Tokushu Kika Kogyo Co., Ltd.; 400 to 450 rpm) for 5 minutes. Then, the resultant mixture was pulverized by a dyno mill (Shinmaru Enterprises Corporation; grinding container: 0.3 liters; 100 ml/min.×2 Pass; glass bead 3GX (0.5 to 0.75 mm. dia.); peripheral speed: 10 m/sec.). The post-pulverization average particle diameter of methominostrobin was 1.27 µm. To the resultant methominostrobin, 0.02 parts of 1,2-benzisothiazolin-3-one (PROXEL GXL, Zeneca K.K.) treated with stirring and mixing by a homo disper (Tokushu Kika Kogyo Co., Ltd.) and a mixture of a polyol derivative and a carboxylic acid-based polymer (Agrisol FL100F, Kao Corporation) were added. These substances were further treated with stirring and mixing by a homo disper, thus obtaining an agrochemical formulation in the form of an aqueous suspension.

### (Reference example 2)

26.03 parts of methominostrobin material was pulverized by a sample mill. Then, 12.50 parts of 40.8% aqueous solution of a sodium naphthalenesulfonate formaldehyde polycondensate (Newkalgen FS-4, Takemoto Oil & Fat Co., Ltd.), 5.00 parts of sodium alkyl naphthalenesulfonate (Newkalgen WG-1, Takemoto Oil & Fat Co., Ltd.), 0.20 parts of 1,2-benzisothiazolin-3-one (PROXEL GXL, Zeneca K.K.), 5.00 parts of ethylene glycol (Wako Pure Chemical Industries, Ltd.), and 48.77 parts of distilled water were added to the pulverized methominostrobin material, and mixed by a homo disper (Tokushu Kika Kogyo Co., Ltd.; 400 to 450 rpm) for 5 minutes. Then, the resultant mixture was pulverized by a dyno mill (Shinmaru Enterprises Corporation; grinding container: 0.3 liters; 100 ml/min.×2 Pass; glass bead 3GX (0.5 to 0.75 mm. dia.); peripheral speed: 10 m/sec.). The post-pulverization average particle diameter of methominostrobin was 1.01 µm. To the resultant methominostrobin, 2.50 parts of 2% aqueous solution of xanthan gum (Rhodopol 23, Rhone-Poulenc S.A.)treated with stirring and mixing by a homo disper (Tokushu Kika Kogyo Co., Ltd.) was added. These substances were further treated with stirring and mixing by a homo disper, thus obtaining an agrochemical formulation in the form of an aqueous suspension.

### (Reference example 3)

26.03 parts of methominostrobin material was pulverized by a sample mill. Then, 20.00 parts of 40.8% aqueous solution of a sodium naphthalenesulfonate formaldehyde polycondensate (Newkalgen FS-4, Takemoto Oil & Fat Co., Ltd.), 0.20 parts of 1,2-benzisothiazolin-3-one (PROXEL GXL, Zeneca K.K.), 8.00 parts of sodium alkyl naphthalenesulfonate (Newkalgen WG-1, Takemoto Oil & Fat Co., Ltd.), 5.00 parts of ethylene glycol (Wako Pure Chemical Industries, Ltd.), and 38.27 parts of distilled water were added to the pulverized methominostrobin material, and mixed by a homo disper (Tokushu Kika Kogyo Co., Ltd.; 400 to 450 rpm) for 5 minutes. Then, the resultant mixture was pulverized by a dyno mill (Shinmaru Enterprises Corporation; grinding container: 0.3 liters; 100 ml/min.×2 Pass; glass bead 3GX (0.5 to 0.75 mm. dia.); peripheral speed: 10 m/sec.). The post-pulverization average particle diameter of methominostrobin was 1.01 µm. To the resultant methominostrobin, 2.50 parts of 2% aqueous solution of xanthan gum (Rhodopol 23, Rhone-Poulenc S.A.)treated with stirring and mixing by a homo disper (Tokushu Kika Kogyo Co., Ltd.) was added. These substances were further treated with stirring and mixing by a homo disper, thus obtaining an agrochemical formulation in the form of an aqueous suspension.

### (Reference example 4)

Fifteen parts of methominostrobin pulverized in advance by a sample mill (Fuji Denki Kogyo), 1 part of sodium dodecyl benzenesulfonate (NEOPELEX No. 6F, Kao Corporation), 2 parts of ligninsulfonate salt (Lignosite 458, Georgia Pacific), 25 parts of bentonite (Kunigel VI, Kunimine Industries Co., Ltd.), and 57 parts of kaolin clay (HA clay, Sanyo Clay Co., Ltd.) were mixed by a kneader (Fuji Denki Kogyo). Fifteen parts of water was added to the resultant mixture and kneaded together. Next, the resultant mixture was granulated by a basket-shaped extrusion granulator (Yamada Tekkosho) using a screen having 1.2 mm-diameter holes. The resultant granules were adjusted and dried, thus obtaining an agrochemical granule.

The components and weight ratios of the agrochemical formulations in the form of an aqueous suspension prepared in Examples 1 through 6 and Reference examples 1 through 3 are shown in Tables 1-1 and 1-2.

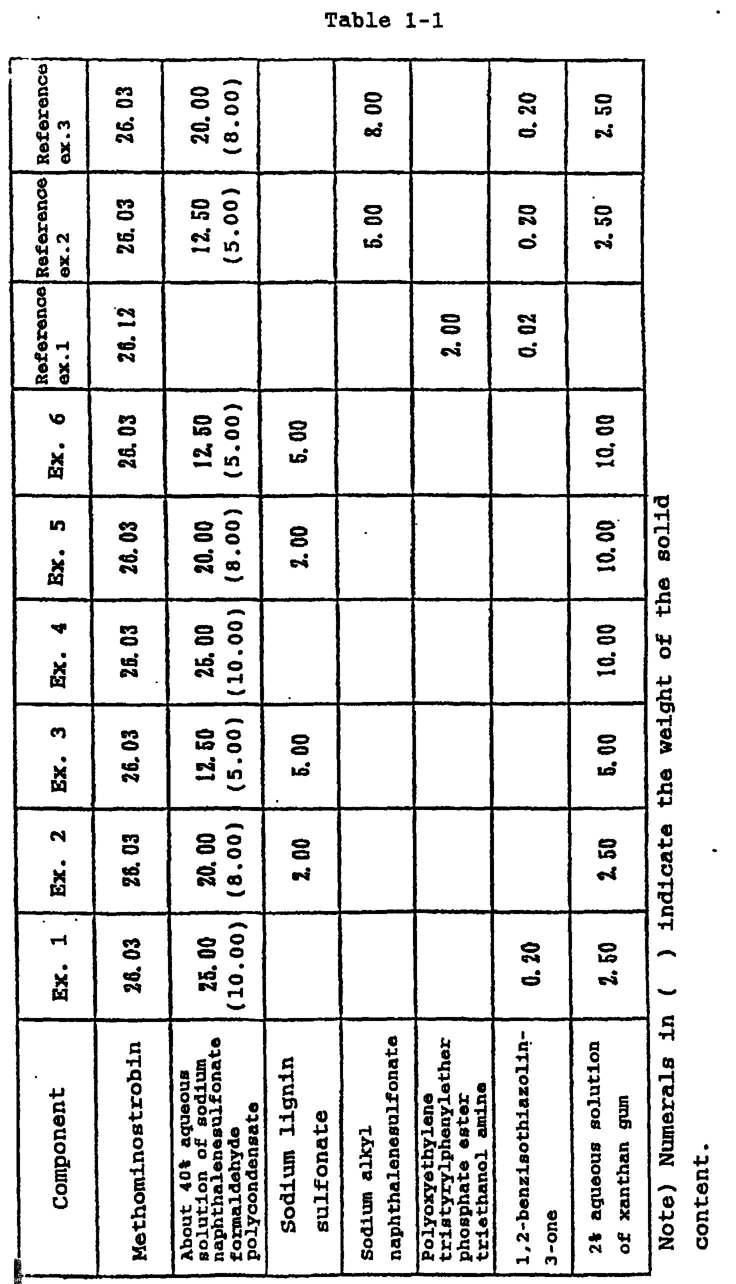

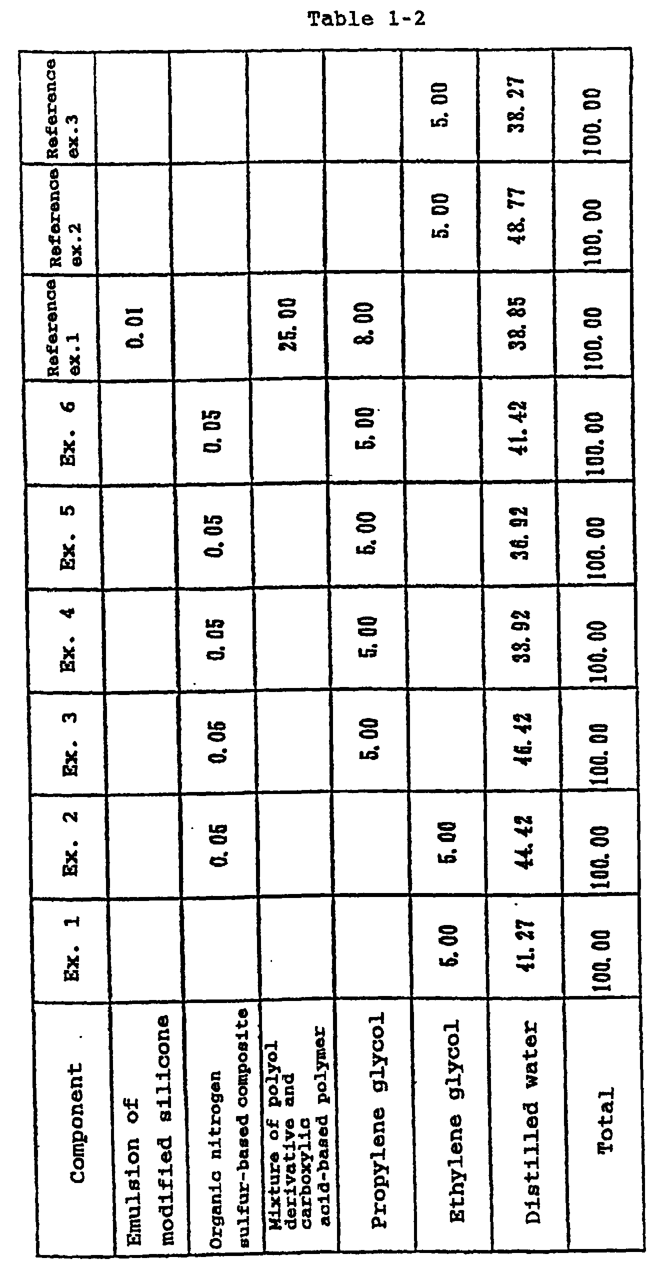

### (Test 1)

The agrochemical formulations in the form of an aqueous suspension prepared in Examples 1 through 6 and Reference examples 1 through 3 were subjected to a acceleration test to check a change in the average particle diameter of methominostrobin under the condition shown in Table 2 below. Specifically, the formulations were stored at the temperatures for the periods shown in Table 2. The average particle diameter was measured by a laser diffraction method (range lens: 45 mm (measurable particle diameter: 0.1 to 80 µm); dispersion mediums water; analysis model: polydisperse) using Mastersizer X (Malvern Instruments Ltd.). The results are shown in Table 2.

**Table 2**

| Average particle diameter (µm) | Ex.1 | Ex.2 | Ex.3 | Ex.4 | Ex.5 | Ex.6 | Reference ex.1 | Reference ex.2 | Reference ex.3 |
|---|---|---|---|---|---|---|---|---|---|
| Immediately after preparation | 1.01 | 0.98 | 0.92 | 0.85 | 0.70 | 0.66 | 1.49 | 0.75 | 0.75 |
| (5°C) 2 weeks | 0.94 | 1.14 | 0.87 | | | | | | |
| (54°C) 2 weeks | 0.89 | 0.85 | 0.85 | 0.79 | 0.71 | 0.67 | | | |
| (54°C) 2 months | | | | 0.86 | 0.78 | 0.77 | | | |
| (-5°C) 2 weeks | | | | 0.84 | 0.63 | 0.61 | | | |
| (-20°C) 1 week | | | | 0.93 | 0.66 | 0.60 | | | |
| (-20°C) 2 weeks | | | | 0.84 | 0.64 | 0.60 | | | |
| (5°C) 10 days | | | | | | | | 0.77 | 0.77 |
| (40°C) 10 days | | | | | | | | 2.95 | 2.95 |
| (40°C) 1 month | | | | | | | 3.06 | | |

The results of Test 1 demonstrate the following. In Examples 1 through 6 of the present invention, an arylsulfonate condensate salt is independently used or an arylsulfonate condensate salt and a ligninsulfonate salt are used in combination as a sulfonic acid-based surf actant. The agrochemical formulations in the form of an aqueous suspension prepared in these examples are more stable compared to those prepared in Reference example 1 using a polyoxyethylene-based surfactant and Reference examples 2 and 3 using a sodium alkyl naphthalenesulfonate as a surfactant, since the particle growth of methominostrobin is inhibited in Examples 1 through 6.

### (Test 2)

The agrochemical formulation in the form of an aqueous suspension prepared in Example 2 and the agrochemical granule prepared in Reference example 4 were tested for the effect on rice blast and the adverse influence on rice.

### Test for the effect of preventing rice blast by applying the agent to the water surface:

After the first outbreak of symptoms of rice blast, rice (species: Koshihikari) in three zones of a rice paddy (one zone: 20 m²) was treated with each of the agrochemical formulation in the form of an aqueous suspension and the agrochemical granule. Specifically, on July 1, the agrochemical formulation in the form of an aqueous suspension was uniformly provided to the water surface by a 2-liter sprayer, and the agrochemical granule was uniformly provided to the water surface manually. At the time of treatment, the ratio of the disease plants was 88.3% on average. In 3 weeks after the treatment and in 4 weeks after the treatment, the percentage by area of the plants having rice blast and the degree of generation of brown spots were checked. The results are shown respectively in Tables 3 and 4.

**Table 3**

| 3 weeks after treatment | Amount of treatment (/10a) | Percentage by area of disease plants (%) | | | | Prevention ratio (%) | Degree of generation of brown spots |
|---|---|---|---|---|---|---|---|
| Agent used for test | | Zone 1 | Zone 2 | Zone 3 | Average | | |
| Ex. 2 | 150gai | 0.185 | 0.083 | 0.120 | 0.129 | 52.0 | 1.60 |
| Ex. 2 | 100gai | 0.158 | 0.130 | 0.122 | 0.137 | 49.1 | 1.26 |
| Ex. 2 | 75gai | 0.255 | 0.127 | 0.115 | 0.166 | 38.3 | 1.15 |
| Reference ex.4 | 150gai | 0.148 | 0.092 | 0.122 | 0.121 | 55.0 | 1.92 |
| Not treated | 0 | 0.232 | 0.170 | 0.405 | 0.269 | 0.0 | 1.11 |

**Table 4**

| 4 weeks after treatment | Amount of treatment (/10a) | Percentage by area of disease plants (%) | | | | Prevention ratio (%) | Degree of generation of brown spots |
|---|---|---|---|---|---|---|---|
| Agent used for test | | Zone 1 | Zone 2 | Zone 3 | Average | | |
| Ex. 2 | 150gai | 0.088 | 0.038 | 0.060 | 0.062 | 73.0 | 1.35 |
| Ex. 2 | 100gai | 0.080 | 0.055 | 0.063 | 0.066 | 71.3 | 1.12 |
| Ex. 2 | 75gai | 0.092 | 0.098 | 0.068 | 0.086 | 62.6 | 1.06 |
| Reference ex.4 | 150gai | 0.058 | 0.052 | 0.073 | 0.061 | 73.5 | 1.68 |
| Not treated | 0 | 0.150 | 0.128 | 0.413 | 0.230 | 0.0 | 1.03 |

The results of Test 2 demonstrate the following. Example 2 provides a similar level of biological effect as that of the agrochemical granule agent in Reference example 4. The harmful effect of the agrochemical formulation in the form of an aqueous suspension in Example 2 on the rice plant was equal to or less than that of the agrochemical granule in Reference example 4.

Various other modifications will be apparent to and can be readily made by those skilled in the art without departing from the scope and spirit of this invention. Accordingly, it is not intended that the scope of the claims appended hereto be limited to the description as set forth herein, but rather that the claims be broadly construed.

### INDUSTRIAL APPLICABILITY

An agrochemical formulation in the form of an aqueous suspension according to the present invention has an improved stability since growth of particles of an agrochemical active ingredient thereof is inhibited. The agrochemical formulation provides a similar level of biological effect as that of an agrochemical granule. The harmful effect of the agrochemical formulation on plants is equal to or less than that of the agrochemical granule.

## Claims

1. An agrochemical formulation in the form of an aqueous suspension, comprising:
particles of one or two or more types of agrochemical active ingredient dispersed in an aqueous dispersion medium including a sulfonic acid-based surfactant, wherein:
the agrochemical active ingredient has a water solubility of 100 ppm or more and 1000 ppm or less at 20°C, and
the sulfonic acid-based surfactant is one of an arylsulfonate condensate salt, and a combination of an arylsulfonate condensate salt and a ligninsulfonate salt.

2. An agrochemical formulation of an aqueous suspension according to claim 1, wherein the sulfonic acid-based surfactant is the combination of the arylsulfonate condensate salt and the ligninsulfonate salt.

3. An agrochemical formulation in the form of an aqueous suspension according to claim 1, wherein the particles have an average particle diameter of about 0.1 µm to about 10 µm.

4. An agrochemical formulation in the form of an aqueous suspension according to claim 1, wherein the particles have an average particle diameter of about 0.5 µm to about 4 µm.

5. An agrochemical formulation in the form of an aqueous suspension according to claim 1, wherein the agrochemical active ingredient is contained in about 0.5% by weight to about 70% by weight with respect to a total weight of the agrochemical formulation in the form of an aqueous suspension, and the sulfonic acid-based surfactant is contained in about 1% by weight to about 20% by weight with respect to the total weight of the agrochemical formulation in the form of an aqueous suspension.

6. An agrochemical formulation in the form of an aqueous suspension according to claim 1, further comprising a thickening agent in the aqueous dispersion medium, the thickening agent being one of a polymer-based thickening agent and an inorganic thickening agent.

7. An agrochemical formulation in the form of an aqueous suspension according to claim 6, wherein the thickening agent is one or two or more selected from the group consisting of xanthan gum, wellane gum, rhamxan gum, guar gum, locust bean gum, tragacanth gum, and colloidal silica.

8. An agrochemical formulation in the form of an aqueous suspension according to claim 6, wherein the thickening agent is contained in about 0.01% by weight to about 20% by weight with respect to a total weight of the agrochemical formulation in the form of an aqueous suspension.

9. An agrochemical formulation in the form of an aqueous suspension according to claim 1, substantially excluding a surfactant having a polyoxyethylene chain in a structure thereof.

10. An agrochemical formulation in the form of an aqueous suspension according to claim 1, substantially excluding alkylarylsulfonate.

11. An agrochemical formulation in the form of an aqueous suspension according to claim 1, wherein the agrochemical active ingredient is a fungicide.

12. An agrochemical formulation in the form of an aqueous suspension according to claim 11, wherein the fungicide is methominostrobin.
